(19) Europäisches Patentamt
European Patent Office
Office européen des brevets

(11) **EP 4 375 953 A1**

(12) **EUROPEAN PATENT APPLICATION**

(43) Date of publication:
**29.05.2024   Bulletin 2024/22**

(21) Application number: **22208898.1**

(22) Date of filing: **22.11.2022**

(51) International Patent Classification (IPC):
**G06V 20/52** (2022.01)      **G06V 20/56** (2022.01)
**G06V 10/82** (2022.01)

(52) Cooperative Patent Classification (CPC):
**G06V 20/52; G06V 10/82; G06V 20/56**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
• **TOYOTA JIDOSHA KABUSHIKI KAISHA Toyota-shi, Aichi-ken 471-8571 (JP)**
• **MindVisionLabs Limited London N8 9HU (GB)**

(72) Inventors:
• **ABDELKAWY, Hazem 1140 BRUSSELS (BE)**
• **AL JUNDI, Rahaf 1140 BRUSSELS (BE)**
• **PALMER, Luke LONDON N8 9HU (GB)**
• **PALASEK, Petar LONDON N8 9HU (GB)**

(74) Representative: **Cabinet Beau de Loménie 158, rue de l'Université 75340 Paris Cedex 07 (FR)**

(54) **PERCEPTUAL LOAD DETERMINATION METHOD, COMPUTER PROGRAM, COMPUTER READABLE MEDIUM, PERCEPTUAL LOAD DETERMINATION SYSTEM AND ADVANCED DRIVING ASSISTANCE SYSTEM**

(57)   A method for determining a perceptual load ( $PL_{scene}^{pred}$ ) of a person facing a scene, comprising:

S20) updating a scene graph (sg) of the scene (s), updating the scene graph including detecting objects present in the scene, and determining their positions ($p_i$); the scene graph (sg) comprising a node ($r_i$) for each detected object ($o_i$), the node ($r_i$) comprising a position ($p_i$) of the object ($o_i$);

S30) by passing the scene graph (sg) through a perceptual load determination module (PLDM), determining the global perceptual load value ( $PL_{scene}^{pred}$ ), the perceptual load determination module (PLDM) being a convolutional neural network trained to determine the global perceptual load value ( $PL_{scene}^{pred}$ ) on the basis of the scene graph (sg).

A perceptual load determination system for implementing the method.

S10) Inputting the scene image si

S20) Updating the scene graph sg

  S21) Detecting and classifying the object in the scene image si

  S22) Calculating dephts maps $dm_i$ for the detected objects $o_i$

  S23) Calculating trajectories $tr_i$, class $c_i$, detection confidence si, width wi, height hi, for the detected objects $o_i$

  S24) Calculating appearance features $af_i$ of the detected object $o_i$

  S25) Updaing the scene graph sg depth maps $dm_i$ for the detected objects $o_i$

S30) Calculating the contribution PLi of the detected objects $i_i$ to the global perceptual load and the global perceptual load $PL_{scene}^{pred}$

  S31) Calculating node embeddings ($x_i^0$)

  S32) Determining objects contributions PLi and global perceptual load $PL_{scene}^{pred}$ by performing message passing

**FIG.6**

**Description**

BACKGROUND OF THE INVENTION

1. Field of the Invention

The present disclosure relates to methods and systems for determining a global perceptual load value of a person facing a scene, in particular a scene in which some of the objects present in the scene are moving, or for determining the respective contributions of these objects to the perceptual load of that person.

2. Description of Related Art

Numerous methods have been developed in order to determine the perceptual load of a driver driving a vehicle, in particular based on images acquired by front cameras of the vehicle, see for instance the method proposed by Ref.[1] cited below.

However, reliably determining the perceptual load is a challenging task. In particular, the methods developed so far fail to correctly determine the relative contributions of the different objects of aspects of the scene to the perceptual load of the person, for instance of the driver.

Consequently, there remains a need for systems and methods which are capable of analyzing the available acquired data so as to reliably determine, based on these data, the perceptual load of a person faced with the scene.

The following references disclose various technologies related to image analysis or segmentation and situation awareness of a driver:

[1] Palmer, L., Bialkowski, A., Brostow, G.J., Ambeck-Madsen, J., Lavie, N.: Predicting the perceptual demands of urban driving with video regression. In: 2017 IEEE Winter Conference on Applications of Computer Vision (WACV). pp. 409-417. IEEE (2017)

[2] Godard, C., Mac Aodha, O., Firman, M., Brostow, G.J.: Digging into self-supervised monocular depth prediction. In: The International Conference on Computer Vision (ICCV) (October 2019)

[3] Jocher, G., Stoken, A., Chaurasia, A., Borovec, J., NanoCode012, TaoXie, Kwon, Y., Michael, K., Changyu, L., Fang, J., V, A., Laughing, tkianai, yxNONG, Skalski, P., Hogan, A., Nadar, J., imyhxy, Mammana, L., AlexWang1900, Fati, C., Montes, D., Hajek, J., Diaconu, L., Minh, M.T., Marc, albinxavi, fatih, oleg, wanghaoyang0106: ultralytics/yolov5: v6.0 - YOLOv5n 'Nano' models, Roboflow integration, TensorFlow export, OpenCV DNN support (Oct 2021).

[4] Li, C., Chan, S.H., Chen, Y.T.: Driver-centric risk object identification. arXiv preprint arXiv:2106.13201 (2021).

[5] Broström, M.: Real-time multi-object tracker using yolov5 and deep sort. https://github.com/mikel-brostrom/Yolov5 DeepSort Pytorch (2020)

[6] Wojke, N., Bewley, A., Paulus, D.: Simple online and realtime tracking with a deep association metric. In: 2017 IEEE international conference on image processing (ICIP). pp. 3645-3649. IEEE (2017).

[7] Simonyan, K., Zisserman, A.: Very deep convolutional networks for large-scale image recognition. arXiv preprint arXiv: 1409.1556 (2014).

[8] Morris, C., Ritzert, M., Fey, M., Hamilton, W.L., Lenssen, J.E., Rattan, G., Grohe, M.: Weisfeiler and leman go neural: Higher-order graph neural networks. In: Proceedings of the AAAI conference on artificial intelligence. vol. 33, pp. 4602-4609 (2019).

[9] Wang, X., Girshick, R., Gupta, A., He, K.: Non-local neural networks. In: Proceedings of the IEEE conference on computer vision and pattern recognition. pp.7794-7803 (2018).

[10] Schulz, K., Sixt, L., Tombari, F., Landgraf, T.: Restricting the flow: Information bottlenecks for attribution. arXiv preprint arXiv:2001.00396 (2020).

[11] Kim, J., Canny, J.: Interpretable learning for self-driving cars by visualizing causal attention. In: Proceedings of the IEEE international conference on computer vision. pp. 2942-2950 (2017).

SUMMARY OF THE INVENTION

In view of the above-mentioned problem, the objective of the present disclosure is to propose methods and systems which are capable of reliably determining a perceptual load of a driver, in particular reliably identifying the objects of the scene which most contribute to increase the perceptual load of the driver.

In order to meet the above purpose, the following computer-implemented perceptual load determination method is proposed. This method is a method for determining at least one of a global perceptual load value of a person facing a scene (s) and a predicted contribution of one of objects present in the scene to said global perceptual load value.

The method comprises performing, at each time point over successive time points, the steps of:

S20) updating a scene graph of the scene (s) based at least on data acquired by a main sensor; wherein

updating the scene graph at step S20 includes a step S21) of detecting object(s) present in the scene, and determining a position of each detected object, at the considered time point, the position being a datum representative of an at least three-dimensional position of the detected object relative to the main sensor; the scene graph comprising one node for each detected object, the node comprising at least said position of the detected object;

S30) by passing the scene graph through a perceptual load determination module, determining at least one of the global perceptual load value and a predicted contribution of one of the detected objects to said global perceptual load value, the perceptual load determination module being a convolutional neural network trained to determine at least one of the global perceptual load value and a predicted contribution of one of the detected objects to said global perceptual load value on the basis of the scene graph.

In the above definition, the global perceptual load value of a person facing a scene means a global perceptual load value that a person (that is, a human being) would be subjected to, when facing that scene.

Advantageously, the above-proposed method in some embodiments can be implemented in such a manner that the global perceptual load value and/or the predicted contribution(s) of object(s) present in the scene to said global perceptual load value can be calculated at step S30 from a single image.

In some embodiments, the global perceptual load value is calculated as a function, for instance as a weighted sum or as a (normal) sum, of the predicted contribution to said global perceptual load value of the respective detected objects over all the detected objects.

In some embodiments, the main sensor is a camera; the method comprises a step S10) of inputting a scene image showing the scene at the considered time point; and at step S20), the scene graph is updated based on data obtained based on the scene image (si), and preferably is updated based only on data obtained based on the scene image.

In the present disclosure, 'obtaining a datum' includes at least one of acquiring the datum from a device or an outer system, for instance, acquiring the datum from a sensor, and calculating the datum based on one or more other data. Calculating the datum may be for instance calculating the datum based on the scene image, the scene image having been acquired by a camera, or calculating the datum based on a 3D cloudpoint acquired by a lidar, etc.

In some embodiments, step S21 comprises determining estimated lateral coordinates in a plane perpendicular to an optical axis of the camera, for each detected object; updating the scene graph at step S20 includes a step S23) of calculating a depth map representing predicted depths in the scene image; whereby the position of the detected object is determined based on said lateral coordinates and said depth map.

In some embodiments, step S21 comprises performing semantic segmentation of the scene image so as to obtain a bounding box for each detected object; and the lateral coordinates of each detected object are calculated based on the bounding box thereof.

In some embodiments, updating the scene graph at step S20 includes:

S22) for each object detected in the scene image, obtaining an appearance feature for the object;
S25) calculating the updated scene graph for the current time point so that in the scene graph, each node includes an appearance feature for the object.

In some embodiments, updating the scene graph at step S20 includes:

S23) obtaining a trajectory of each detected object, a trajectory being a datum including at least one or more positions of the detected object at one or more prior time points;
S25) calculating the updated scene graph for the current time point so that in the scene graph, each node includes a trajectory of the object.

The trajectory may be calculated by implementing a multi-object tracking algorithm. The one or more prior time points are determined relative to the current time point t; it may be for instance the preceding time point t-1, or the prior time points may be t-1 and t-2, etc.

In some embodiments, the scene graph further includes a scene node which is not associated with any specific detected object but represents the whole scene image.

In some embodiments, the scene graph is a weighted complete undirected graph in which edge weights are calculated as a function of a distance between the nodes that are connected by the considered edge. The distance may be an euclidean distance.

In some embodiments, a node embedding for a detected object being either the node associated with the object or being calculated based at least on that node, the perceptual load determination module comprises a message passing module which, at a step S32 during step S30, on the basis of said node embedding(s), determines at least one of the global perceptual load value and the predicted contribution to said global perceptual load value of one of the detected objects by, at a step S32, performing message passing between the node embeddings.

In some variants of the above embodiments, during said message passing operation, messages sent to a considered node are calculated based only on values of node embeddings associated with nodes located at a distance smaller than a predetermined threshold from the considered node.

In addition, in said embodiments in which the perceptual load determination module comprises a message passing module, the perceptual load determination module comprises a node embedding module which, at a step S31 during step S30, on the basis of the scene graph, calculates said node embedding(s); the node embedding module preferably comprising at least one, preferably at least two fully connected layers.

In the present disclosure, the following notations or conventions are used:

When a noun is written followed by '(s)', it means that the object or item indicated by the noun can be in the singular or plural form. Accordingly, the expression 'object(s)' means 'at least one object'. Furthermore, a sentence like 'Object(s) are present' includes the singular form, that is, it encompasses the case where a single object is present. 'Property(ies)' means 'property or properties'.

The term "comprising a" should be understood as being synonymous with "comprising at least one" unless otherwise stated.

A function calculated "based on a datum" is a function whose output is a function of the datum. Such function may also be calculated based on one or more additional data. Consequently, 'based on' can be understood as 'based at least on'.

In particular implementations, the proposed methods are determined by computer program instructions.

Accordingly, another purpose the present disclosure is to propose one or more computer program(s) comprising instructions which, when the instructions are executed by a computer, cause the computer to carry out the steps of one of the above-proposed perceptual load determination methods.

The computer program(s) may use any programming language, and be in the form of source code, object code, or code intermediate between source code and object code, such as in a partially compiled form, or in any other desirable form. The computer may be any data processing means, for instance one or more personal computer(s), one or more processors, one or more remote servers, etc. It can be made up of a single machine or a plurality of machines, for instance spread over different locations.

The present disclosure also includes a non-transitory computer readable medium, having the one or more above-defined computer program(s) stored thereon.

The computer-readable medium may be an entity or device capable of storing the program. For example, the computer-readable medium may comprise storage means, such as a read only memory (ROM), e.g. a compact disk (CD) ROM, or a microelectronic circuit ROM, or indeed magnetic recording means, e.g. a floppy disk or a hard disk.

The present disclosure further includes a perceptual load determination system for determining at least one of a global perceptual load value of a person facing a scene (s) and a predicted contribution of one of objects present in the scene to said global perceptual load value; the perceptual load determination system comprising a computer-readable medium as defined above, and one or more processors configured to execute the computer program(s) stored on the computer-readable medium.

More broadly, the present disclosure further includes an advanced driving assistance system for a vehicle, comprising a perceptual load determination system as defined above.

It is intended that combinations of the above-described elements and those within the specification may be made, except where otherwise contradictory.

It is to be understood that both the foregoing general description and the following detailed description are exemplary and explanatory only and are not restrictive of the disclosure, as claimed.

The accompanying drawings, which are incorporated in and constitute a part of this specification, illustrate embodiments of the disclosure and together with the description, and serve to explain the principles thereof.

BRIEF DESCRIPTION OF THE DRAWINGS

Fig. 1 is a schematic view showing a vehicle comprising a perceptual load determination system in accordance with the present disclosure and a remote server used for training the perceptual load determination system;
Fig. 2 is a schematic representation of the functional units of the scene graph generation module of the perceptual load determination system represented on Fig.1;

Fig. 3 is a exemplary scene image which can be used as an input when executing a method according to the present disclosure;

Fig.4 is a modified version of the scene image of Fig.3, showing the bounding boxes of some of the objects detected in the scene;

Fig. 5 is a schematic representation of the functional units of the scene graph generation module of the perceptual load determination system represented on Fig.1; and

Fig.6 is block diagram showing the steps of an exemplary embodiment of a method according to the present disclosure.

DETAILED DESCRIPTION OF EMBODIMENTS

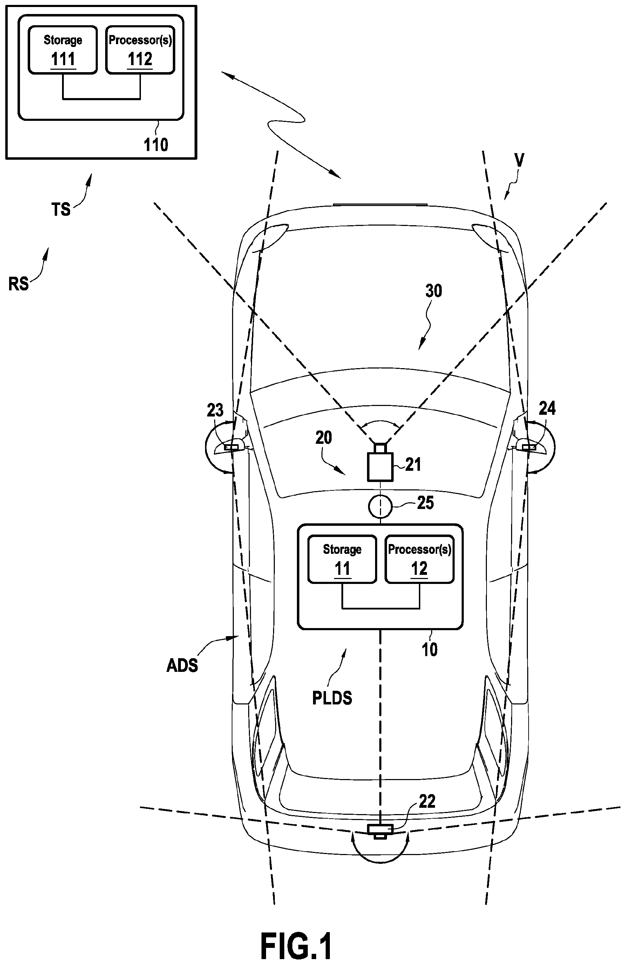

A perceptual load determination method and a perceptual load determination system which constitute an exemplary embodiment of the present disclosure are now going to be presented in relation with Figs. 1-6.

In the embodiment presented herein, these method and system have been developed in order to determine the perceptual load of a driver driving a vehicle V, based on images showing the scene or environment in which the driver is driving.

Although in the present document the methods and systems of the present disclosure are mainly presented in a context of a driver having to drive a vehicle in the scene, it should be understood that the methods and systems presented herein may be used to determine the perceptual load of a person present in a considered scene whatever the specific task carried out by the person. For instance, the perceptual load determination method might also be used to determine the perceptual load of a pedestrian having to cross a road, etc.

The vehicle V comprises an autonomous driving system ADS, which itself comprises a perceptual load determination system PLDS.

The ADS system comprises a set of sensors 20, each sensor being connected to a computer 10, a set of actuators (not shown), and other components. The set of sensors 20 comprises in particular sensors configured to perceive an external environment of vehicle V, which include in particular a front camera 21, a rear camera 22, lateral cameras 23,24 and a roof-mounted lidar 25. The front camera 21 is configured to acquire images of the road ahead of vehicle V. These images, herein called 'scene images', show the scene ahead of vehicle V.

These images constitute scene images si based on which the perceptual load of the driver has to be determined, in order to help the autonomous driving system perform autonomous driving or assist the driver to drive vehicle V.

When vehicle V is in motion, at each time step, at step S10 the image si acquired by camera 21 is transmitted to the perceptual load determination system PLDS. The perceptual load determination system PLDS acquires this image si, and, based on this image, determines a predicted global perceptual load prediction value $PL_{scene}^{pred}$ (or predicted load) for the given scene image si.

The predicted load $PL_{scene}^{pred}$ is transmitted to the autonomous driving system ADS. On this basis, the autonomous driving system ADS issues appropriate controls to drive vehicle V on the road and/or, if appropriate, adapts the behavior of the vehicle on the basis of the perceptual load of the driver, to make it easier for the driver to drive the vehicle, in particular to safely drive the vehicle.

Most of the components and functional units of the autonomous driving system ADS are on-board vehicle V; however, part of them can be remote components, and can be for instance part of a remote server RS. The remote server RS and vehicle V include not-shown communication means to exchange information.

The vehicle V is a car, which represents a non-limiting example of a vehicle on which a perceptual load determination system according to the present disclosure can be mounted.

As it will be explained below, the perceptual load determination system PLDS is a trainable, neural network-based system.

For training purposes, the perceptual load determination system PLDS is implemented initially on a training system TS implemented on the remote server RS.

The training system TS is configured to train the identification system PLDS, based on training dataset(s) prepared beforehand. When the identification system PLDS is trained, it is deployed on vehicle V.

Then, in operation, when vehicle V is moving on a road, the perceptual load determination system PLDS is used to determine the perceptual load $PL_{scene}^{pred}$ of the driver in real time based on the images acquired by camera 21 and to transmit the successively determined values $PL_{scene}^{pred}$ of the perceptual load of the driver to the autonomous driving system ADS which on this basis drives vehicle V or assists the driver for driving vehicle V.

In vehicle V, the perceptual load determination system PLDS is implemented on a central driving computer 10 ('computer 10') and actually, the functions of the perceptual load determination system PLDS, as well as most functions of the autonomous driving system ADS, are implemented on computer 10.

Computer 10 comprises a non-transitory storage medium 11 and one or more processor(s) 12. The one or more processors 12 are intended to be representative of the presence of any one or more processors or processing devices, of any of a variety of forms. In addition, although computer 10 is represented on Fig.1 in a single box, it may be a distributed calculation system, comprising a plurality of processors, possibly physically arranged on different locations. For instance, part of processors 12 may be part of remote server RS.

The training system TS is implemented on the remote server RS. The training system TS is implemented on a main training computer 110 ('computer 110'), which comprises a non-transitory storage medium 111 and one or more processor(s) 112.

A computer program PLDP comprising instructions which, when they are executed by the processor(s) 12, cause these processor(s) to carry out the steps of a perceptual load determination method according to the present disclosure is stored in storage medium 11. The program PLDP and the storage medium 11, are examples respectively of a computer program and a computer-readable recording medium according to the present disclosure.

The memory 11 of computer 10 constitutes a non-volatile recording media according to the present disclosure, readable by the one or more processor(s) 12 and on which the program PLDP is recorded.

< System architecture and operation >

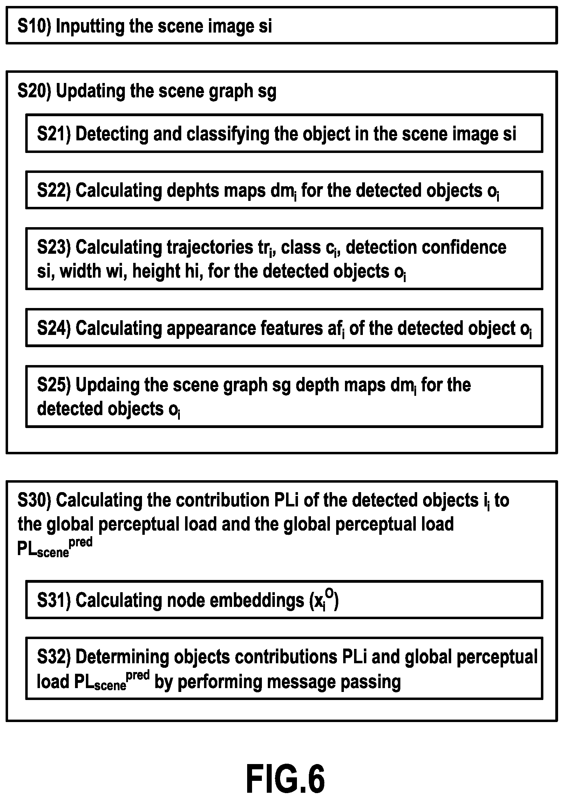

An exemplary functional architecture of the perceptual load determination system PLDS is now going to be presented in relation with Figs. 1-5. The corresponding perceptual load determination method is further illustrated by Fig.6.

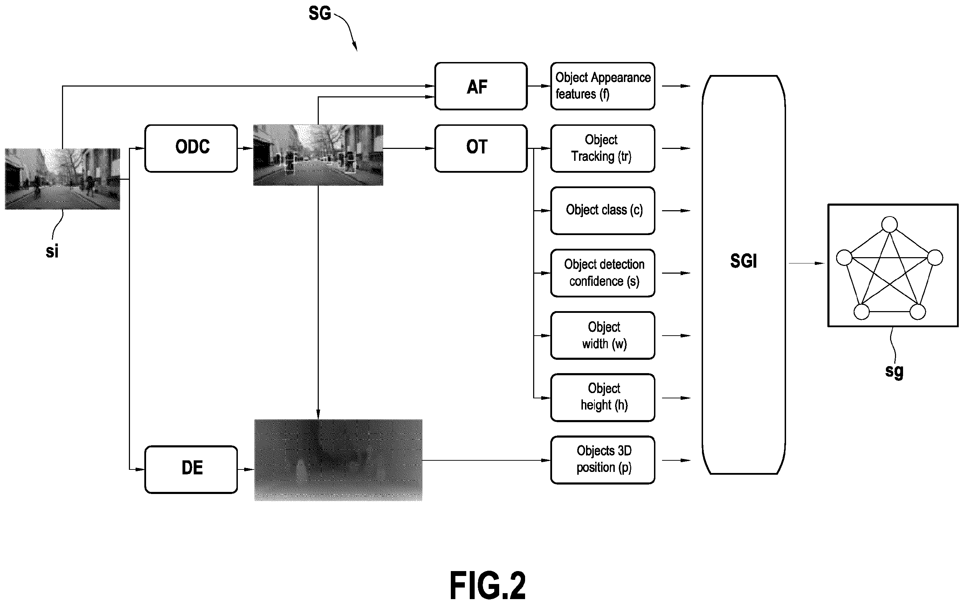

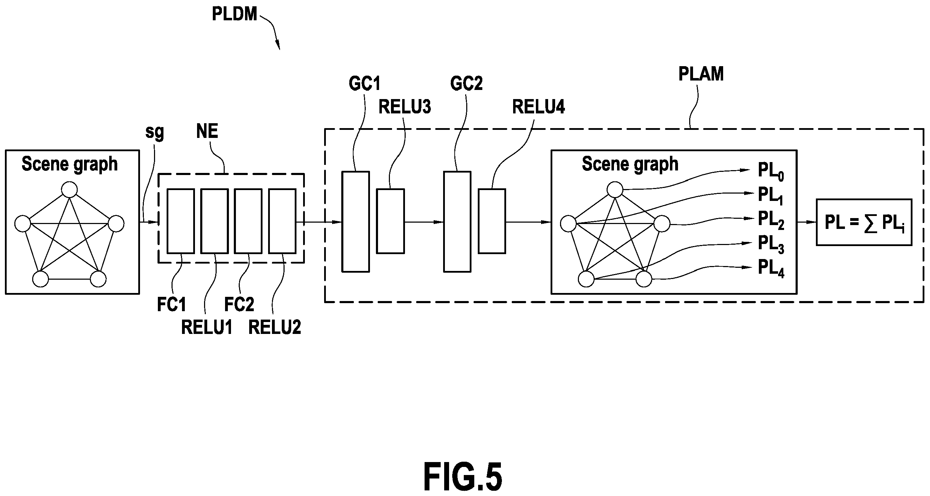

The perceptual load determination system PLDS mainly comprises two sub-systems: A scene graph generation module SG (Fig.2), and a perceptual load determination module PLDM (Fig.5).

The scene graph generation module SG comprises an object detection and classification module ODC, a depth estimation module DE, an object tracking module OT, an appearance features determination module AF and a scene graph integration module SGI.

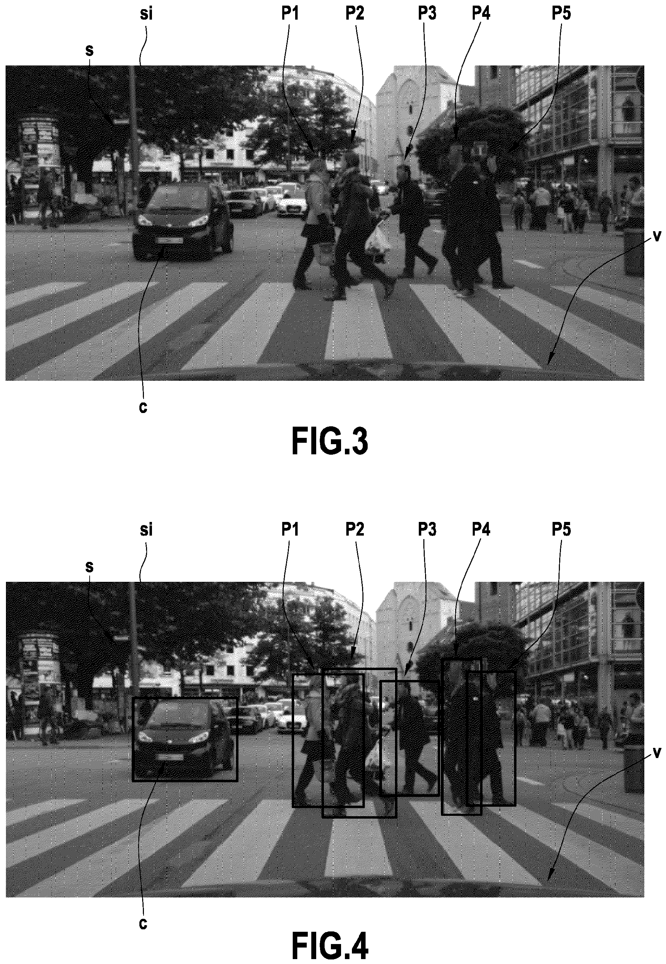

Fig.3 shows an examplary scene image si. This image si shows a scene s which is a portion of a street in an urban environment, in front of vehicle V.

In this image si, the main mobile objects $o_i$ which can be identified are a car C and five pedestrians P1, P2, P3, P4 and P5.

Fig.4 shows the scene image si, modified by further adding the bounding boxes of these mobile objects as an overlay.

In this section the perceptual load determination method will be described as the same time as the neural-network based models (the scene graph generation module SGM and the perceptual load determination module PLDM) used to implement the method.

The perceptual load determination method is performed iteratively in order to determine at each time step a predicted perceptual load $PL_{scene}^{pred}$ of the driver, in order for the vehicle ADS system to have, at each time step, up-to-date information about the perceptual load of the driver.

The method comprises repeatedly performing the following steps, at each time point over successive time points:

S10) inputting the scene image si;
S20) updating a scene graph sg based on the scene image si;

S30) based on the scene graph sg, predicting the perceptual load $PL_{scene}^{pred}$ of the driver faced with the scene shown in the scene image si.

Steps S20 and S30 are presented below in relation with the functional modules used to perform these steps: The scene graph generation module SG and the perceptual load determination module PLDM.

S20 - Scene Graph Generation

The scene graph generation module SG is a functional unit configured to output a scene graph sg of the scene shown on the scene image si. The scene graph sg is normally configured so as to include one node $r_i$ for each object $o_i$ (physical objects in the real world) detected in the scene image si.

In scene graph sg, each node $r_i$ comprises at least a position value $p_i$ for the detected object $o_i$ associated wit the node $r_i$.

Any model suitable for generating such scene graphs sg can be used.

In particular, any appropriate method to determine the position values $p_i$ for the different objects $o_i$ present in the scene can be used.

In the embodiment presented herein, the scene graph is a fully connected graph, in which each pair of nodes is connected. Other types of graphs can be used, for instance directed or undirected graphs.

In the present embodiment, the scene graph generation module SG comprises five sub-modules: an object detection and classification module ODC, a depth estimation module DE, an object tracking module OT, an appearance feature determination module AF and a scene graph integration module SGI.

The four modules ODC, DE, AF and OT can be implemented using any known model capable of performing their respective functions.

To calculate the scene graph sg, at step S20 the following operations are performed.

First, at steps S21-S24, different features characterizing the main objects $o_i$ present in the scene are extracted. These features include at least the positions $p_i$ of the detected objects $o_i$. In the present embodiment, these features further include the size (height $h_i$ and width $w_i$), the appearance $f_i$, the class $c_i$ and the confidence of the detected objects $o_i$, along with their trajectories $tr_i$. Each of these features except the trajectory $tr_i$ may be calculated either based only on the current frame, the scene image si, or based on several values obtained by tracking the considered object through a number of sequential frames. Conversely calculating a trajectory $tr_i$ requires a knowledge of the position of the object $o_i$ at one or more past time points.

For sake of simplicity, the method will be presented hereafter in the case where a plurality of objects are detected in the scene. It should be understood that the method is also applicable to scene in which only a single object is detected. Also, if no object were to be detected in a scene image, the method could of course return a result such as a 'very low perceptual load'.

Finally, at step S25 the scene graph sg is updated for the current time point.

At the first iteration, the scene graph sg is initiated as a void graph.

S21 - Object detection and classification

At step S21, the objects $o_i$ present in the scene image si are detected and classified by the object detection and classification module ODC. The detected objects $o_i$ constitute a set V.

In the present embodiment, the detection and classification module ODC is implemented as a yolov5x model. Such models are described in detail in Ref.[3].

On the basis of the scene image si, the object detection and classification module ODC returns a set of detected objects $o_i$. In the output of the ODC module, each detected object $o_i$ is described by its bounding box $b_i^{\circ}$ ($b_i^{\circ} \in R^4$), its class $c_i^{\circ}$, and a detection confidence score $s_i^{\circ}$, set in the range 0 to 1.

The class is a type or a family of objects to which the detected object is predicted to belong, for instance 'car', 'person', 'bicycle', etc.

The confidence score is a value representative of an estimated probability for the output of the ODC module, for the considered object $o_i$, to be correct.

The scene graph generation module SG may be configured to consider only the objects belonging to a predetermined set of classes $c_i^{\circ}$, for instance, the classes defining mobile objects.

For instance, in the present embodiment, only the objects belonging to the following classes are used for further processing: 'car', 'person', 'bicycle', 'truck', 'motorcycle', 'bus', 'train', 'stop sign', 'traffic light', 'dog', 'backpack', 'handbag', 'suitcase'.

The class of an object $o_i$ is represented as a one-hot encoded vector $c_i^{\circ}$ ($c_i^{\circ} \in Z^{C+12}$), where C represents the total number of object classes which can be identified by the object detection and classification module ODC.

Hereinafter, the following notations are used: ($x_i^{\circ}, y_i^{\circ}$) refers to the middle point of the bounding box $b_i^{\circ}$, and $h_i^{\circ}$ and $w_i^{\circ}$ to refer to the object's height and width.

$h_i^{\circ}$ and $w_i^{\circ}$ can be easily calculated based on the detected object's bounding box. All the coordinates and object shapes are normalised to a [0, 1] range relative to the global volume of the scene shown in the input scene image si.

S22 - Depth estimation and position determination

At step S22, a depth map dm for the scene shown in the scene image si is calculated by the depth map estimation module DE.

In the present embodiment, the monodepth2 model proposed by Ref.[2] is used as the depth map estimation module DE to calculate depth map dm.

Then, based on the depth map dm and the bounding boxes $b_i^{\circ}$ of the detected objects $o_i$, the depth $z_i^{\circ}$ of the object $o_i$, or 'z coordinate' of the object $o_i$, which represents a distance between the camera and the object $o_i$ along the rear-front direction of vehicle V, is calculated. This z-coordinate $z_i^{\circ}$ can be calculated as the mean value of the pixels of the depth map D contained inside the object $o_i$'s bounding box $b_i^{\circ}$. The estimated z coordinate $z_i^{\circ}$ is also normalised to a [0, 1] range.

The depth estimate $z_i^{\circ}$ along with the lateral dimensions $x_i^{\circ}$ and $y_i^{\circ}$ of the detected object $o_i$ constitute the position $p_i$ of the object. Accordingly, steps S21 and S22 are an example of operations performed to calculate the positions $p_i$ of the detected objects $o_i$.

Any other suitable method for calculating the position $p_i$ of the detected objects $o_i$ can be used. For instance, the positions $p_i$ could also be determined based on 3D pointclouds acquired by lidar 25.

S23 - Trajectory determination

At step S23, a trajectory $tr_i$ is calculated for each object $o_i$ by the object tracking module OT.

The trajectory $tr_i$ of an object $o_i$ is any datum which includes or is representative of at least a past position $(x_{i,\tau}^{\circ}, y_{i,\tau}^{\circ}, z_{i,\tau}^{\circ})$ of the considered object $o_i$ at a time point $\tau$ in the past (relative to the current time point t). These past positions can of course be obtained based on the positions of the detected objects detected during the prior iterations of the method at prior time points.

In the present embodiment, the object tracking module OT is implemented based on the DeepSort multi object tracking algorithm proposed by Refs. [5,6]. The object tracking module OT accordingly tracks the detected objects $o_i$ throughout the different scene images si successively inputted to the scene graph generation module SG.

At any given time step t, the trajectory of any one of the tracked objects $o_i$ accordingly is described with a matrix $T_{i,t}^{\circ}$ ($T_{i,t}^{\circ} \in R^{L \times 3}$), where each row represents a vector $p_{i,\tau}^{\circ} = (x_{i,\tau}^{\circ}, y_{i,\tau}^{\circ}, z_{i,\tau}^{\circ})$, i.e. representing the position of the object $o_i$ at a time point $\tau$. L denotes the number of frames over which the considered object $o_i$ is tracked; consequently $\tau$ varies from t-L to t-1.

S24 - Appearance features determination

Then at step S24, an appearance features $f_i$ is calculated for each object $o_i$ by the appearance feature determination module AF.

An appearance features $f_i$ of an object $o_i$ is any datum which is representative of an appearance of the considered object $o_i$. The appearance denotes here any feature relative to a visual, or apparent, property of the object, and should be sufficiently meaningful or precise to distinguish objects distinct from each other.

Consequently, any convolutional-based model trained to perform object detection, semantic segmentation, or the like can be used to implement an appearance feature determination module, so as to output an 'appearance feature' characterizing the object. The appearance feature is normally determined based on a sub-image representing the considered object.

In order to properly determine the appearance feature, the appearance feature determination module AF most preferably should be trained on objects similar to the objects encountered on the considered scene.

Indeed, generally the portion of the scene image si in which the object has been identified (which corresponds to the bounding box of the object) is extracted from the whole image si, resized, and then inputted to the appearances features calculation module AF, which on this basis outputs a vector $f_i^{\circ}$ of latent features, called 'appearance features'.

In the present embodiment, the VGG16_bn model disclosed by Ref.[7] and pretrained on the ImageNet dataset is used for extracting appearance features. More specifically, the appearance features $f_i$ for objects $o_i$ are extracted from the third max-pooling layer corresponding to each object bounding box $b_i^{\circ}$ in the input scene image si. The extracted features are then max-pooled spatially, resulting in a vector representation $f_i^{\circ}$ ($f_i^{\circ} \in R^{256}$) for each object $o_i$.

Scene node

In addition to the nodes associated with the detected objects $o_i$, optionally a 'scene node' may be added in the scene graph. Advantageously, such scene node may be added to the scene graph in order to differentiate the different frames of a considered sequence of scene images. Such scene node, also called gist node or ego node, has been proposed for instance by Ref. [4].

The scene node summarises the entire scene image si.

To take into account the scene node, an additional class $c_{C+1}°$ is further defined for index i=C + 1, and refers to the entire scene image si.

At step S21, the scene node is classified as belonging to that special class $c_{C+1}°$; a detection confidence score $s_{scene}$ of 1 is attributed to the scene node. In addition, in the present embodiment, the spatial position of the scene node is set to $p_{scene} = [x_{scene}, y_{scene}, z_{scene}] = [0.5, 1, 0]$, with the shape (height and width) set to the shape of the whole scene image, i.e. $h_{scene} = 1$, $w_{scene} = 1$.

At step S23, the trajectory of the scene node is calculated using the speed and yaw rate sensor values from the previous L frames, and is encoded in a vector tr scene ($tr_{scene} \in R^{(L-1) \cdot 3+1}$).

At step S24, the appearance features $f_{scene}$ for the scene node are extracted from the same layer of the feature extraction network used for individual object appearance feature extraction and max-pooled spatially into a vector $f_{scene}$ ($f_{scene} \in R^{256}$).

Adding the scene node provides a global context and ensures that scenes which do not include any outstanding detected object can be processed without any workarounds for such edge cases.

S25 - Scene graph calculation

Any appropriate representation or data structure may be chosen for the scene graph sg.

In the present embodiment, in the scene graph sg each of the detected objects $o_i$, as well as a fictitious object corresponding to the scene node is represented as a vertex in the complete undirected graph sg.

As known per se, the adjacency matrix Au of an unweighted complete graph is defined as $A^u = J_{|V|} - I_{|V|}$, where J n is a n×n matrix of ones, and In the identity matrix, i.e. there are no self-loops in the graph.

In the present embodiment, the scene graph sg is defined as a weighted complete undirected graph.

Furthermore, in the graph the edge weights are a function of the Euclidean distance between the nodes that form the edge $e_{i,j}$. Accordingly the adjacency matrix $A^w$, whose components $A^w_{[i,j]}$ correspond (are equivalent) to the edges $e_{i,j}$ can be expressed as:

$$A^w_{[i,j]} = \sqrt{3} - d_{euclidean}(o_i, o_j) - \sqrt{3}I_{|V|}$$

where $d_{euclidean}$ is the Euclidean distance between the objects $o_i$ and $o_j$.

As the coordinates of all the objects in V are in the range [0, 1], the largest distance between two objects is $\sqrt{3}$ . By defining the edge weights $e_{i,j}$ as in the above equation, the largest weights are attributed to objects that are closer together, and that there are no self-loops in the graph.

In the present embodiment, each node $r_i$ is obtained by concatenating each of the previously described features into a vector $r_i \in R^D$ where

$$r_i = (f°_i, c°_i, s°_i, p°_i, h°_i, w°_i, tr°_i)$$

Then, the node representations $r_i$ are grouped within a nodes matrix R ($R \in R^{|V| \times D}$) obtained by stacking together all of the node representations $r_i$.

Finally, the scene graph sg is obtained for the inputted scene image si by combining the nodes matrix R and the adjacency matrix A; consequently: $SG(si) = (R, A^w)$.

S30 - Perceptual Load Determination

The scene graph sg comprises the main information relative to the objects present in the scene.

The scene graph sg can be exploited for calculating the perceptual load of the driver, as in the use case presented herein; it can also be used for other purposes.

In the embodiment presented here, the content of the scene graph sg is processed by the Perceptual Load Determination Module PLDM, which on this basis determines the perceptual load of the driver (of the person) faced with the scene, at the considered time point.

In the present embodiment, the Perceptual Load Determination Module PLDM comprises two sub-modules: A node embedding module NE and a Perceptual Load Aggregation Module PLAM (Fig.5).

Accordingly at step S30, the perceptual load of the driver is calculated by passing the scene graph sg successively through the node embedding module NE (step S31) and the Perceptual Load Aggregation Module PLAM (step S32).

S31 - Node embeddings calculation

The input of the Perceptual Load Determination Module PLDM, and therefore of the node embedding module NE, is the scene graph sg described in the previous section.

First, at step S31, each of the node representations $r_i = R_{[i,*]} \in R^D$ is processed by the node embedding module NE.

The node embedding module NE is used in the present embodiment to improve the performance of the Perceptual Load Determination Module PLDM, by transforming the scene graph sg to obtain a representation or node embedding xi° for each node $r_i$ of the scene graph. This node embedding xi° will then be used subsequently as an optimized input by the Perceptual Load Aggregation Module to calculate the global perceptual load $PL_{scene}^{pred}$ .

In the present embodiment, the node embedding module NE mainly comprises, and actually consists of, two fully connected layers FC1 and FC2; other architectures of embedding or encoding networks can be used.

In module NE, each fully connected layer has d hidden units and is followed by a ReLU Unit (Rectified Linear Unit) applying a ReLU activation function. The node embedding xi° outputted by the embedding layers can therefore be expressed as the following vector $x_i^0$ ($x_i^0 \in R^d$):

$$x_i^0 = \text{ReLU}(W_2 \, \text{ReLU} \, (W_1 \, r_i + b_1) + b_2)$$

where $W_1 \in R^{d \times D}$ , $W_2 \in R^{d \times d}$, $b_1$ and $b_2$ denote learnable weights ($b_1 \in R^d$ and $b_2 \in R^d$).

The embeddings $x_i^0$ calculated by the node embedding module NE at step S31 are then transmitted to the Perceptual Load Aggregation Module PLAM. S32 - Perceptual load determination

At step S32, based on the node embeddings $x_i^0$, the Perceptual Load Aggregation Module PLAM calculates the individual contributions $PL_i$ to the global perceptual load $PL_{scene}^{pred}$ of the driver for each detected object $o_i$; then, on the basis of based on the individual contributions $PL_i$, the Perceptual Load Aggregation Module PLAM calculates the global perceptual load $PL_{scene}^{pred}$ . In the present embodiment, as an exemplary embodiment, the global perceptual load $PL_{scene}^{pred}$ is calculated as the sum of the individual contributions $PL_i$.

The Perceptual Load Aggregation Module PLAM is a functional module configured to calculate the individual contributions $PL_i$ by performing message passing operations. That is, at each time point the Perceptual Load Aggregation Module PLAM calculates messages (values) representing an influence on a considered object $o_i$ of the other detected objects $o_j$; the Perceptual Load Aggregation Module PLAM then aggregates the messages sent to the object $o_i$ to calculate the individual contribution PLi of the object $o_i$ to the global perceptual load.

In the present embodiment, the Perceptual Load Aggregation Module PLAM mainly comprises two GraphConv layers GC1 and GC2. Each of these layers is configured to perform message passing operation. The embeddings $x_i^0$ are progressively transformed by GraphConv layers GC1 and GC2 into values $x_i^1$ and $x_i^2$, which can be considered as contributions to the global perceptual load. The contribution $x_i^2$ outputted by layer GC2 for an object $o_i$ is the predicted contribution PL $_i$ of the detected object $o_i$.

Various functions may be implemented to implement the message passing operation performed by layers GC1 and GC2.

For instance, each of these layers may be configured to perform the message passing operation so as to calculate the contribution ($x_i^1$ or $x_i^2$) for a considered node of index i outputted by a graphconv layer (GC1 or GC2) based on a maximum weighted value among all the weighted values calculated for the contributions ($x_i^0$ or $x_i^1$) of the nodes $r_j$ adjacent the considered node $r_i$. The nodes $r_j$ considered to be adjacent to node $r_i$ are the nodes $r_j$ for which the distance between the positions $p_i^°$ and $p_j^°$ is less than a predetermined threshold.

Importantly the weight (or parameter) used to calculate a weighted value (or message) between two nodes $r_i$

and $r_j$ is the value $e_{i,j}$ of the graph edges between these nodes $r_i$ and $r_j$. These values $e_{i,j}$, as mentioned before, are equal to the coefficients $A^w_{[i,j]}$ of the adjacency matrix A.

More information on GraphConv layers can be found in Ref.[8].

Accordingly, the node embedding $x_i^0$ is passed successively through the first GraphConv layer GC1 (1 = 0) with d output channels and through a ReLU layer, so as to obtain the updated node embedding $x_i^1$ via message passing from the given node's neighbourhood:

$$x_i^1 = ReLU3 \left( \Theta_1^1 x_i^1 + \Theta_2^1 \max_{j \in N(i)} \{ A_{[i,j]}^1 . x_j^1 \} + b^1 \right)$$

where $\Theta_1^1 \in R^{d \times d}$, and $\Theta_2^1 \in R^{d \times d}$ denote learnable weight matrices in layer GCl, $b_1 \in R^d$ is the bias vector, N(i) represents the neighbourhood of node i, ReLU3 represents the ReLU function applied by the ReLU3 layer, and $A_{[i,j]}^1$ represents the edge weight between nodes i, j as defined in the previous section, with $A^0 = A^w$ in the first layer. In the experiments carried out, the value d = 64 is used.

The different matrices A0, A1 and A2 represent successive values of the adjacency matrix A, but at the different steps which correspond to different steps of the graph after each layer.

Then, the output of the first layer, $x_i^1 \in R^d$ is passed through the second GraphConv layer GC2. The layer GC2 maps the node representations into scalar values; the ReLU function is then applied to these values by a final ReLU layer ReLU4. Accordingly:

$$x_i^2 = ReLU4 \left( \Theta_1^2 x_i^2 + \Theta_2^2 \max_{j \in N(i)} \{ A_{[i,j]}^2 . x_j^2 \} + b^2 \right)$$

This equation is similar to the equation of $x_i^1$.

In the above equation, $\Theta_1 \in R^{1 \times d}$, $\Theta_2 \in R^{1 \times d}$, b2 $\in R^d$, and ReLU4 represents the ReLU function applied by the ReLU4 layer. All the edge weights $A_{[i,j]}^2$ are set to 1 in this layer, i.e. A1 = Au.

Each of the outputs $x_1^2$ of layer GC2 represents the individual contribution, noted $PL_i$, of the corresponding detected object $o_i$ detected in the input frame (In addition, in the present embodiment, layer GC2 further outputs a contribution for the scene node). In other terms, $PL_i = x_i^2$.

Finally, the global perceptual load prediction value $PL_{scene}^{pred}$ for the given input image I is calculated by summing up each of the individual contributions $PL_i$:

$$PL_{scene}^{pred} = \sum_{i=1}^{|\nu|} PL_i$$

where $PL_i$ is the contribution of a node $o_i$ to the perceptual load of the driver.

The individual contributions $PL_i$ to the perceptual load of each detected object $o_i$ as well as the global perceptual load $PL_{scene}^{pred}$ of the driver are then transmitted to the autonomous driving system ADS of vehicle V.

On this basis, the autonomous driving system ADS performs the driving and/or assistance tasks for driving vehicle V or for assisting the driver of vehicle V.

The perceptual load determination operations are then resumed at step S10: A new scene image si is acquired and transmitted to the Perceptual Load Determination System PLDS.

< Training >

The scene graph generation module SG may be prepared separately from the Perceptual Load Determination Module PLDM. For instance, the scene graph generation module SG may be prepared (and trained) beforehand and then frozen.

Then, at a subsequent stage the Perceptual Load Determination Module PLDM is trained. The training is performed by end-to-end training. During training, successive frames or scene images si are successively inputted to the perceptual load determination system PLDS (more precisely, to the Scene Graph generation module SG). In each case, the scene graph sg is calculated by the Scene Graph generation Module SGM is transmitted to the Perceptual Load Determination Module PLDM which, on this basis, determines (or predicts) the global perceptual load prediction value $PL_{scene}^{pred}$ of the driver.

For each frame, the training dataset therefore includes, for each scene image si to be inputted by the perceptual load determination system PLDS, the best estimate $PL_{scene}^{GT}$, as ground truth value, of the perceptual load of the driver facing the scene shown in the scene image.

The training may be performed by backpropagation using a loss function L.

The loss function L may be any function which minimizes differences between the predicted $PL_{scene}^{pred}$ and the ground-truth (desired) $PL_{scene}^{GT}$.

< Results >

Several experiments have been led to compare scene-level perceptual load predictions and object importance estimations performed by the proposed PLDS system to several reference models.

< Reference models >

In the experiments, two embodiments of the PLDS system (the embodiment presented above, and a simplified version not comprising the PLAM module) were compared to different reference models. These reference models are based on the following models:

- three pixel-based models: a ResNet50 with self-attention layer (proposed by Ref.[9]); a ResNet50 with Information Bottleneck Attribution (IBA) postprocessing (proposed by Ref. [10]); a ResNet50 with object proposal causal attention in postprocessing (proposed by Ref. [11]); and
- a scene-graph-based GCN model (proposed by Ref. [4]).

Since the above-mentioned models were initially trained to predict a future driver response, they were modified to predict the importance of detected objects as follows:

- Self-attention: In case of the non-local ResNet50 model, the non-local attention map was extracted and the maximum value contained inside each object's bounding box was considered as that object's importance value.
- IBA: Similarly for the ResNet50 model, an attention map is extracted using the information bottleneck for attribution method (of Ref. [10]) from the output of the conv3_x layer. The maximum value of the extracted attention map contained in an object's bounding box is defined as that object's attribution value.
- Causal attention: A causal filtering process similar to Ref.[11] is applied, where an object is masked from the input image in order to observe how its removal aff ects the output of the model. The observed output difference is then assigned to the removed object as its importance value.
- Graph causal inference: For the graph-based model a similar method to the previously described causal attention is applied,where individual nodes are removed from the scene graph and the observed output difference is assigned to the corresponding object as its importance value, based on Ref.[4].

< Performance Metrics >

To compare the object importance estimates outputted by the different models tested during the experiments, to assess the capacity of these models to accurately and correctly identify the most important object in the scene, against the human-labelled ground truth values provided with the dataset, the following metrics were used:

- top-1 accuracy (acc@top1), which represents the capacity of the model to correctly detect the most important object in the scene image si. acc@top1 therefore represents the proportion of samples where the considered model correctly identified the most important object as the most important;

- top-3 accuracy (acc@top3) similarly represents the capacity of the model to correctly detect the three most important object in the scene image si;
- the selectivity measure (selectivity) represents the capacity of the model to correctly analyse how well the model can separate the most important group from the least important one, defined as the diff erence between the average z-score of the top group minus the average z-score of the bottom group; importance normalisation was conducted independently for each method allowing us to compare importance estimation on a consistent scale.
- the Pearson's r correlation coefficient, which represents the perceptual load determination performance between the predicted and ground truth values.

The results of the experiments are shown in the table below.

These results of the experiments show in particular a significant gain of performance with the proposed PLDS system.

| Method | Pearson's r | Selectivity | acc @top1 | acc @top3 |
|---|---|---|---|---|
| self-attention | 0.8882 | 0.1304 | 28.14 | 65.83 |
| Causal attention | 0.8855 | 0.9311 | 39.19 | 67.59 |
| IBA | 0.8855 | 0.6491 | 39.19 | 68.09 |
| Graph causal inference | 0.8069 | 0.9086 | 34.92 | 63.32 |
| PLDS without PLAM | 0.8737 | 1.1518 | 45.73 | 75.38 |
| PLDS | 0.8822 | 1.1547 | 50.25 | 82.91 |

In this table, the first column lists the different models which have been tested. PLDS denotes the exemplary model described above, and PLDS without PLAM denotes the same model, modified by removing the PLAM module: The node embedding network NE therefore was trained to directly predict the global perceptual load.

The methods according to the present disclosure (PLDS and PLDS without PLAM) show a high perceptual load accuracy, comparable to the self-attention network of Ref.[9] and produce significantly improved object importance estimates against all prior art methods. Moreover, these tests show that incorporating the explicit calculation of perceptual load with the PLAM module improves both object importance and perceptual load prediction relative to the same architecture without the PLAM module.

Although the present disclosure herein has been described with reference to particular embodiments, it is to be understood that these embodiments are merely illustrative of the principles and applications of the present disclosure.

In particular, although the methods and systems according to the present disclosure have been presented in the case of the control of a vehicle, the present disclosure can be applied to a broad variety of devices. It can be applied for instance to any kind of vehicle (ground, marine vehicle, aircraft, ..), to industrial machines or robots, etc.

It is intended that the specification and examples be considered as exemplary only, with a true scope of the disclosure being indicated by the following claims.

**Claims**

1. A computer-implemented perceptual load determination method for determining at least one of a global perceptual load value ( $PL_{scene}^{pred}$ ) of a person facing a scene (s) and a predicted contribution (PLi) of one of object(s) ($o_i$) present in the scene to said global perceptual load value ( $PL_{scene}^{pred}$ );

the method comprising performing, at each time point over successive time points, the steps of:

S20) updating a scene graph (sg) of the scene (s) based at least on data acquired by a main sensor (21); wherein

updating the scene graph (sg) at step S20 includes a step S21) of detecting object(s) present in the scene, and determining a position ($p_i$) of each detected object, at the considered time point, the position ($p_i$) being a datum representative of an at least three-dimensional position of the detected object ($o_i$) relative to the

main sensor (21);

the scene graph (sg) comprising one node ($r_i$) for each detected object ($o_i$), the node ($r_i$) comprising at least said position ($p_i$) of the detected object ($o_i$);

S30) by passing the scene graph (sg) through a perceptual load determination module (PLDM), determining at least one of the global perceptual load value ( $PL_{scene}^{pred}$ ) and a predicted contribution (PLi) of one of the detected objects (oi) to said global perceptual load value ( $PL_{scene}^{pred}$ ), the perceptual load determination module (PLDM) being a convolutional neural network trained to determine at least one of the global perceptual load value ( $PL_{scene}^{pred}$ ) and a predicted contribution (PLi) of one of the detected objects (oi) to said global perceptual load value ( $PL_{scene}^{pred}$ ) on the basis of the scene graph (sg).

2. A computer-implemented perceptual load determination method according to claim 1, wherein

the main sensor is a camera (21);
the method comprises a step S10) of inputting a scene image (si) showing the scene at the considered time point; and
at step S20), the scene graph (sg) is updated based on data obtained based on the scene image (si), and preferably is updated based only on data obtained based on the scene image (si).

3. A computer-implemented perceptual load determination method according to claim 2, wherein

step S21 comprises determining estimated lateral coordinates ($x_i$, $y_i$) in a plane perpendicular to an optical axis of the camera (21), for each detected object ($o_i$);
updating the scene graph (sg) at step S20 includes a step S23) of calculating a depth map (dm) representing predicted depths in the scene image (si);
whereby the position ($p_i$) of the detected object ($o_i$) is determined based on said lateral coordinates and said depth map (dm).

4. A computer-implemented perceptual load determination method according to claim 3, wherein

step S21 comprises performing semantic segmentation of the scene image (si) so as to obtain a bounding box ($b_i$) for each detected object ($o_i$); and
the lateral coordinates ($x_i$, $y_i$) of each detected object ($o_i$) are calculated based on the bounding box ($b_i$) thereof.

5. A computer-implemented perceptual load determination method according to any one of claims 1 to 4, wherein updating the scene graph (sg) at step S20 includes:

S22) for each object ($o_i$) detected in the scene image (si), obtaining an appearance feature ($f_i$) for the object;
S25) calculating the updated scene graph (sg) for the current time point so that in the scene graph (sg), each node ($r_i$) includes an appearance feature ($f_i$) for the object.

6. A computer-implemented perceptual load determination method according to any one of claims 1 to 5, wherein updating the scene graph (sg) at step S20 includes:

S23) obtaining a trajectory ($tr_i$) of each detected object ($o_i$), a trajectory being a datum including at least one or more positions of the detected object at one or more prior time points;
S25) calculating the updated scene graph (sg) for the current time point so that in the scene graph (sg), each node ($r_i$) includes a trajectory ($tr_i$) of the object.

7. A computer-implemented perceptual load determination method according to any one of claims 1 to 6, wherein the scene graph (sg) is a weighted complete undirected graph in which edge weights ($e_{ij}$) are calculated as a function of a distance between nodes that are connected by the considered edge ($e_{ij}$).

8. A computer-implemented perceptual load determination method according to any one of claims 1 to 7, wherein, a node embedding ($x_i°$) for a detected object ($o_i$) being either the node ($r_i$) associated with the object ($o_i$) or being calculated based at least on that node ($r_i$), the perceptual load determination module (PLDM) comprises a message passing module (PLAM) which, at a step S32 during step S30, on the basis of said node embedding(s) ($x_i°$), determines at least one of the global perceptual load value ( $PL_{scene}^{pred}$ ) and the predicted contribution (PLi) to said global perceptual load value ( $PL_{scene}^{pred}$ ) of one of the detected objects ($o_i$) by, at a step S32, performing message passing between the node embeddings ($x_i°$, $x_i^1$).

9. A computer-implemented perceptual load determination method according to claim 8, wherein, during said message passing operation, messages sent to a considered node ($r_i$) are calculated based only on values of node embeddings ($x_i°$, $x_i^1$) associated with nodes ($r_i$) located at a distance smaller than a predetermined threshold from the considered node ($r_l°$).

10. A computer-implemented perceptual load determination method according to claim 8 or 9, wherein the perceptual load determination module (PLDM) comprises a node embedding module (NE) which, at a step S31 during step S30, on the basis of the scene graph (sg), calculates said node embedding(s) ($x_i°$); the node embedding module (NE) preferably comprising at least one, and most preferably at least two, fully connected layers (FC1,FC2).

11. One or more computer program(s) comprising instructions which, when the instructions are executed by a computer, cause the computer to carry out the steps of a perceptual load determination method according to any one of claims 1 to 10.

12. A non-transitory computer readable medium (11), having the one or more computer program(s) according to claim 11 stored thereon.

13. A perceptual load determination system (PLDS) for determining at least one of a global perceptual load value ( $PL_{scene}^{pred}$ ) of a person facing a scene (s) and a predicted contribution (PLi) of one of objects (oi) present in the scene to said global perceptual load value ( $PL_{scene}^{pred}$ ); the perceptual load determination system (PLDS) comprising a computer-readable medium (11) according to claim 12 and one or more processors (12) configured to execute the computer programs stored on the computer-readable medium.

14. An advanced driving assistance system (ADS) for a vehicle, comprising a perceptual load determination system (PLDS) according to claim 13.

**FIG.1**

FIG.2

FIG.3

FIG.4

PLAM

$PL = \sum PL_i$

$PL_0$
$PL_1$
$PL_2$
$PL_3$
$PL_4$

Scene graph

RELU4

GC2

RELU3

GC1

PLDM

NE

FC2  RELU2

RELU1

FC1

sg

Scene graph

**FIG.5**

S10) Inputting the scene image si

S20) Updating the scene graph sg

> S21) Detecting and classifying the object in the scene image si
>
> S22) Calculating dephts maps $dm_i$ for the detected objects $o_i$
>
> S23) Calculating trajectories $tr_i$, class $c_i$, detection confidence si, width wi, height hi, for the detected objects $o_i$
>
> S24) Calculating appearance features $af_i$ of the detected object $o_i$
>
> S25) Updaing the scene graph sg depth maps $dm_i$ for the detected objects $o_i$

S30) Calculating the contribution PLi of the detected objects $i_i$ to the global perceptual load and the global perceptual load $PL_{scene}^{pred}$

> S31) Calculating node embeddings $(x_i^0)$
>
> S32) Determining objects contributions PLi and global perceptual load $PL_{scene}^{pred}$ by performing message passing

# FIG.6

Europäisches
Patentamt

European
Patent Office

Office européen
des brevets

# EUROPEAN SEARCH REPORT

Application Number

EP 22 20 8898

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/121867 A1 (ARAR NURI MURAT [CH] ET AL) 21 April 2022 (2022-04-21)<br>* paragraph [0021] – paragraph [0199]; figures 1-7 * | 1-14 | INV.<br>G06V20/52<br>G06V20/56<br>G06V10/82 |
| A | EP 4 050 510 A1 (TOYOTA MOTOR CO LTD [JP] ET AL.) 31 August 2022 (2022-08-31)<br>* paragraph [0048] – paragraph [0238]; figures 1-14 * | 1-14 | |

TECHNICAL FIELDS
SEARCHED      (IPC)

G06V

The present search report has been drawn up for all claims

| Place of search | Date of completion of the search | Examiner |
|---|---|---|
| The Hague | 30 March 2023 | Thibault, Guillaume |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                               

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 20 8898

This annex lists the patent family members relating to the patent documents cited in  the above-mentioned European search report.
The members are as contained in the European Patent Office EDP file on
The European Patent Office is in no way liable for these particulars which are merely given for the purpose of information.

30-03-2023

| Patent document cited in search report | | Publication date | Patent family member(s) | | Publication date |
|---|---|---|---|---|---|
| US 2022121867 | A1 | 21-04-2022 | CN | 114379565 A | 22-04-2022 |
| | | | DE | 102021126254 A1 | 21-04-2022 |
| | | | JP | 2022068087 A | 09-05-2022 |
| | | | US | 2022121867 A1 | 21-04-2022 |
| EP 4050510 | A1 | 31-08-2022 | NONE | | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Predicting the perceptual demands of urban driving with video regression. **PALMER, L. ; BIALKOWSKI, A. ; BROSTOW, G.J. ; AMBECK-MADSEN, J. ; LAVIE, N.** 2017 IEEE Winter Conference on Applications of Computer Vision (WACV). IEEE, 2017, 409-417
- **GODARD, C. ; MAC AODHA, O. ; FIRMAN, M. ; BROSTOW, G.J.** Digging into self-supervised monocular depth prediction. *The International Conference on Computer Vision (ICCV),* October 2019
- **JOCHER, G. ; STOKEN, A. ; CHAURASIA, A. ; BOROVEC, J. ; NANOCODE012 ; TAOXIE ; KWON, Y. ; MICHAEL, K. ; CHANGYU, L. ; FANG, J.** *Nano' models, Robofl ow integration, TensorFlow export, OpenCV DNN support,* October 2021
- **LI, C. ; CHAN, S.H. ; CHEN, Y.T.** Driver-centric risk object identification. *arXiv:2106.13201,* 2021
- **BROSTRÖM, M.** Real-time multi-object tracker using yolov5 and deep sort. *DeepSort Pytorch,* 2020, https://github.com/mikel-brostrom/Yolov5
- Simple online and realtime tracking with a deep association metric. **WOJKE, N. ; BEWLEY, A. ; PAULUS, D.** 2017 IEEE international conference on image processing (ICIP). IEEE, 2017, 3645-3649
- **SIMONYAN, K. ; ZISSERMAN, A.** Very deep convolutional networks for large-scale image recognition. *arXiv: 1409.1556,* 2014
- **MORRIS, C. ; RITZERT, M. ; FEY, M. ; HAMILTON, W.L. ; LENSSEN, J.E. ; RATTAN, G. ; GROHE, M.** Weisfeiler and leman go neural: Higher-order graph neural networks. *Proceedings of the AAAI conference on artificial intelligence.,* 2019, vol. 33, 4602-4609
- **WANG, X. ; GIRSHICK, R. ; GUPTA, A. ; HE, K.** Non-local neural networks. *Proceedings of the IEEE conference on computer vision and pattern recognition.,* 2018, 7794-7803
- **SCHULZ, K. ; SIXT, L. ; TOMBARI, F. ; LANDGRAF, T.** Restricting the flow: Information bottlenecks for attribution. *arXiv:2001.00396,* 2020
- **KIM, J. ; CANNY, J.** Interpretable learning for self-driving cars by visualizing causal attention. *Proceedings of the IEEE international conference on computer vision,* 2017, 2942-2950